(19) Europäisches Patentamt
European Patent Office
Office européen des brevets

(11) Veröffentlichungsnummer: **0 050 358**
**B1**

# (12) EUROPÄISCHE PATENTSCHRIFT

(45) Veröffentlichungstag der Patentschrift: **20.03.85**

(51) Int. Cl.⁴: **C 07 F 7/22**, C 08 L 83/04

(21) Anmeldenummer: **81108532.3**

(22) Anmeldetag: **20.10.81**

(54) **Vernetzungsmittel für Polyorganosiloxane auf Basis eines Umsetzungsproduktes von Kieselsäureester mit organischer Zinnverbindung und Verfahren zur Herstellung von Polysiloxanelastomeren.**

(30) Priorität: **21.10.80 DE 3039720**

(43) Veröffentlichungstag der Anmeldung: **28.04.82 Patentblatt 82/17**

(45) Bekanntmachung des Hinweises auf die Patenterteilung: **20.03.85 Patentblatt 85/12**

(84) Benannte Vertragsstaaten: **AT CH DE FR IT LI NL**

(56) Entgegenhaltungen:
**DE - A - 1 952 756**
**DE - A - 2 259 802**
**US - A - 3 186 963**
**US - A - 4 137 249**

(73) Patentinhaber: **WACKER-CHEMIE GMBH, Prinzregentenstrasse 22, D-8000 München 22 (DE)**

(72) Erfinder: **Hechtl, Wolfgang, Dr. Dipl.-Chem., Robert-Koch-Strasse 53, D-8263 Burghausen (DE)**
Erfinder: **Garhammer, Arnold, Pfarrkirchener Strasse 56, D-8346 Simbach (DE)**

**EP 0 050 358 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Umsetzungsprodukte von Kieselsäureester, wie Tetraethylsilikat, mit organischer Zinnverbindung, wie Dibutylzinndilaurat, und ihre Verwendung, z.B. zur Vernetzung von zu Elastomeren vernetzbaren Massen auf Grundlage von Diorganopolysiloxan, also als sogenannte Härter bzw. als Bestandteile von Härtern, sind bereits bekannt. Hierzu wird verwiesen auf z.B. DE-AS 1 167 527 (ausgelegt 9. April 1964, Farbenfabriken Bayer Aktiengesellschaft), US 3 186 963 (ausgegeben 1. Juni 1965, J. T. Lewis et al., Midland Silicones Limited), US 3 927 052, ausgegeben 16. Dezember 1975, L. R. Vizurraga, Fiber Industries Inc.) und US 4 137 249 (ausgegeben 30. Januar 1979, E. Wohlfarth et al.).

Die erfindungsgemässen Umsetzungsprodukte haben gegenüber den bisher bekannten Umsetzungsprodukten von Kieselsäureester mit organischer Zinnverbindung insbesondere den Vorteil, dass zu Elastomeren vernetzbare Massen auf Grundlage von Diorganopolysiloxan, welche diese Umsetzungsprodukte enthalten, ohne untragbare Verkürzung der Verarbeitungszeit (englisch: pot life) rascher vernetzen. Dieser Vorteil bleibt auch nach Lagerung der Umsetzungsprodukte bei Raumtemperatur oder Temperaturen bis zu 60°C erhalten.

Gegenstand der Erfindung sind Vernetzungsmittel für Diorganopolysiloxan auf Basis eines Umsetzungsprodukts von Kieselsäureester und organischer Zinnverbindung der Formel

$$R_2Sn(OCOR^1)_2 \qquad (I),$$

worin R einen Butyl- oder Octylrest und $R^1$ einen einwertigen Kohlenwasserstoffrest mit 1 bis 15 Kohlenstoffatomen bedeutet, wobei höchstens eine der Valenzen des an die Carboxylgruppe gebundenen Kohlenstoffatoms durch ein anderes Kohlenstoffatom als dasjenige der Carboxylgruppe abgesättigt ist, dadurch gekennzeichnet, dass diese Umsetzungsprodukte im Gemisch mit organischer Zinnverbindung der Formel

$$R_2Sn(OCOR^2)_2 \qquad (II),$$

worin R die vorstehend dafür angegebene Bedeutung hat und $R^2$ einen einwertigen aliphatischen Kohlenwasserstoffrest mit 3 bis 15 Kohlenstoffatomen bedeutet, wobei mindestens zwei der Valenzen des an die Carboxylgruppe gebundenen Kohlenstoffatoms durch mindestens zwei andere Kohlenstoffatome als dasjenige der Carboxylgruppe abgesättigt sind, in Mengen von 0,1 bis 0,2 Mol Verbindung der Formel (II) je Mol Verbindung der Formel (I), das zur Herstellung der jeweils vorliegenden Menge an Umsetzungsprodukt von Kieselsäureester und organischer Zinnverbindung der Formel (I) eingesetzt wurde, vorliegen.

Zinnverbindungen der Formel (II) sind bereits aus DE-A 1 952 756 als Katalysatoren für die Vernetzung von Diorganopolysiloxanen mit Organokieselsäureestern bekannt. DE-A 1 952 756 konnte jedoch den Gegenstand der Erfindung nicht nahelegen, weil die Umsetzungsprodukte von Kieselsäureester und organischen Zinnverbindungen der Formel (I) bereits Vernetzer und gleichzeitig Zinnverbindungen sind, so dass sich der Fachmann von der Mitverwendung einer weiteren Zinnverbindung keine Vorteile erhoffen konnte.

Als Kieselsäureester bei der Herstellung der Umsetzungsprodukte von Kieselsäureester mit organischer Zinnverbindung der Formel (I) sind Kieselsäureethylester oder Kieselsäure-2-methoxyethylester bevorzugt. Es können beliebige monomere, dimere oder polymere Kieselsäureester eingesetzt werden. Beispiele für bevorzugte Kieselsäureester sind Tetraethylsilikat, Hexaethoxydisiloxan und das Ethoxypolysiloxan mit einem $SiO_2$-Gehalt von etwa 40 Gewichtsprozent, das unter der Bezeichnung «Äthylsilikat 40" oder «Ethylsilikat 40" bekannt ist sowie Tetra-(2-methoxyethyl)-silikat.

Bei der Herstellung der Umsetzungsprodukte von Kieselsäureester mit organischer Zinnverbindung der Formel (I) kann eine Art von Kieselsäureester oder ein Gemisch aus mindestens zwei verschiedenen Arten von Kieselsäureester z.B. ein Gemisch aus Tetraethylsilikat und Hexaethoxydisiloxan verwendet werden.

Vorzugsweise wird Kieselsäureethylester in Mengen von 2 bis 6 Gewichtsteilen je Gewichtsteil organischer Zinnverbindung der Formel (I) eingesetzt.

In Formel (I) können die Reste R gleich oder verschieden sein. Auch in Formel (II) können die Reste R gleich oder verschieden sein. Die Reste R in organischer Zinnverbindung der Formel (II) können die gleichen sein wie die Reste R in der jeweils eingesetzten organischen Zinnverbindung der Formel (I). Sie können aber auch davon verschieden sein.

Die Reste $R^1$ in der organischen Zinnverbindung der Formel (I) können gleich oder verschieden sein. Die Reste $R^2$ in organischer Zinnverbindung der Formel (II) können ebenfalls gleich oder verschieden sein.

Bei den Butylresten kann es sich ebenso wie bei den Octylresten um beliebige Isomere, wie den n-Butyl-, sec-Butyl-, tert.-Butyl-, n-Octyl- und 2-Ethylhexylrest, handeln.

Als Carbonsäuren, von denen sich die Gruppen $-OCOR^1$ in den organischen Zinnverbindungen der Formel (I) ableiten, sind n-Alkansäuren, wie Essigsäure, Laurinsäure, Myristinsäure und Pentadecylsäure, bevorzugt. Es kann sich dabei aber auch z.B. um 3,5,5-Trimethyl-1-hexansäure handeln.

Besonders bevorzugte Beispiele für organische Zinnverbindungen der Formel (I) sind Di-n-butylzinndiacetat, Di-n-octylzinndiacetat, Di-n-butylzinndilaurat und Di-n-octylzinndilaurat.

Bei der Herstellung der Umsetzungsprodukte von Kieselsäureester mit organischer Zinnverbindung der Formel (I) kann eine Art solcher organischer Zinnverbindung oder ein Gemisch aus mindestens zwei solcher Zinnverbindungen eingesetzt werden.

Die Herstellung der Umsetzungsprodukte von Kieselsäureester mit organischer Zinnverbindung der Formel (I) kann durch Erwärmen eines Gemisches aus Kieselsäureester und organischer Zinnverbindung auf 50 bis 200°C während 15 Minuten bis 15 Stunden erfolgen.

Als Carbonsäuren, von denen sich die Gruppen $-OCOR^2$ in den organischen Zinnverbindungen der Formel (II) ableiten, sind in alpha-Stellung zur Carboxylgruppe einfach oder doppelt verzweigte Alkansäuren bevorzugt. Beispiele für solche Alkansäuren sind 2-Ethylhexansäure, sogenannte KOCH-Säuren, wie ein Gemisch aus 9 bis 15 Kohlenstoffatome je Molekül aufweisenden Carbonsäuren, worin die Carboxylgruppe bei 90 Gewichtsprozent der Säuren an ein tertiäres Kohlenstoffatom gebunden ist, und 2,2-4,4-Tetramethyl-1-Pentansäure. Es kann sich dabei aber auch z.B. um Cyclohexanmonocarbonsäure handeln.

Besonders bevorzugte Beispiele für organische Zinnverbindungen der Formel (II) sind ein Di-n-butylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90 Gewichtsprozent der Säuren an ein tertiäres Kohlenstoffatom gebunden ist, ein Di-n-octylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90 Gewichtsprozent der Säuren an ein tertiäres Kohlenstoffatom gebunden ist, Di-n-butylzinndi-2-ethylhexoat und Di-n-octylzinndi-2-ethylhexoat.

Im Gemisch mit Umsetzungsprodukt von Kieselsäureester mit organischer Zinnverbindung der Formel (I) kann eine Art von organischer Zinnverbindung der Formel (II) oder ein Gemisch aus mindestens zwei solchen organischen Zinnverbindungen vorliegen.

Organische Zinnverbindung der Formal (II) liegt vorzugsweise im Gemisch mit Umsetzungsprodukt von Kieselsäureester und organischer Zinnverbindung der Formel (I) bereits zumindest während eines Teils der Lagerung dieses Umsetzungsproduktes vor. Organische Zinnverbindung der Formel (II) kann aber auch diesem Umsetzungsprodukt erst mehr oder weniger kurz vor dessen Anwendung zugesetzt werden.

Zusätzlich zu Umsetzungsprodukt von Kieselsäureester mit organischer Zinnverbindung der Formel (I) und organischer Zinnverbindung der Formel (II) können in den erfindungsgemässen bzw. erfindungsgemäss verwendeten Mischungen weitere Stoffe vorliegen. Beispiele für solche weiteren Stoffe sind überschüssiger Kieselsäureester, hydrophobes Siliciumdioxyd mit einer Oberfläche von mindestens 20 $m^2/g$, Weichmacher, lösliche Farbstoffe und Duftstoffe.

Gegenstand der Erfindung ist weiterhin ein Verfahren zum Herstellen von Organopolysiloxanelastomeren aus in den endständigen Einheiten je eine Si-gebundene Hydroxylgruppe aufweisendem Diorganopolysiloxan und Umsetzungsprodukt aus Kieselsäureester und organischer Zinnverbindung der Formel

$$R_2Sn(OCOR^1)_2 \qquad (I),$$

worin R einen Butyl- oder Octylrest und $R^1$ gleiche oder verschiedene einwertige Kohlenwasserstoffreste mit 1 bis 15 Kohlenstoffatomen bedeutet, wobei höchstens eine der Valenzen des an die Carboxylgruppe gebundenen Kohlenstoffatoms durch ein anderes Kohlenstoffatom als dasjenige der Carboxylgruppe abgesättigt ist, dadurch gekennzeichnet, dass dieses Umsetzungsprodukt im Gemisch mit organischer Zinnverbindung der Formel

$$R_2Sn(OCOR^2)_2 \qquad (II),$$

worin R die vorstehend dafür angegebene Bedeutung hat und $R^2$ gleiche oder verschiedene einwertige aliphatische Kohlenwasserstoffreste mit 3 bis 15 Kohlenstoffatomen bedeutet, wobei mindestens zwei der Valenzen des an die Carboxylgruppe gebundenen Kohlenstoffatoms durch mindestens zwei andere Kohlenstoffreste als dasjenige der Carboxylgruppe abgesättigt sind, eingesetzt wird.

Als in den endständigen Einheiten je eine Si-gebundene Hydroxylgruppe aufweisende Diorganopolysiloxane können auch im Rahmen der Erfindung die gleichen verwendet werden, die bisher zur Herstellung von Organopolysiloxanelastomeren aus in den endständigen Einheiten je eine Si-gebundene Hydroxylgruppe aufweisendem Diorganopolysiloxan, Kondensationskatalysator und Siliciumverbindung, die mindestens drei kondensationsfähige Gruppen je Molekül aufweist, verwendet worden sind oder verwendet werden konnten. (Auch Umsetzungsprodukt aus Kieselsäureethylester und organischer Zinnverbindung der Formel (I) ist als Kombination von Kondensationskatalysator mit Siliciumverbindung, die mindestens drei kondensationsfähige Gruppen je Molekül aufweist, zu betrachten.) Diese Organopolysiloxane sind insbesondere solche, denen die allgemeine Formel

$$HOR^3_2SiO\,(SiR^3_2O)_xSiR^3_2OH$$

zugeschrieben wird.

In dieser Formel bedeutet $R^3$ gleiche oder verschiedene, einwertige, gegebenenfalls substituierte und/oder polymere Kohlenwasserstoffreste und x eine ganze Zahl im Wert von mindestens 1.

Innerhalb bzw. entlang der Silioxankette in der oben angegebenen Formel können, was bei derartigen Formeln üblicherweise nicht dargestellt wird, auch andere Siloxaneinheiten als Diorganosiloxaneinheiten ($SiR^3_2O$) vorliegen. Beispiele für solche anderen, meist jedoch lediglich als mehr oder weniger schwer vermeidbare Verunreinigungen vorliegenden, Siloxaneinheiten sind solche der Formel $R^3SiO_{3/2}$, $R^3_3SiO_{1/2}$ und $SiO_{4/2}$, worin $R^3$ jeweils die oben dafür angegebene Bedeutung hat. Vorzugsweise beträgt die Menge an solchen anderen Siloxaneinheiten höchstens 1 Molprozent.

Beispiele für Kohlenwasserstoffreste $R^3$ sind Alkylreste, wie Methyl-, Ethyl-, Propyl-, Butyl-, Hexyl- und Octylreste; Alkenylreste, wie der Vinyl-, Allyl-, Ethylallyl- und Butadienylrest; sowie Arylreste, wie der Phenylrest.

Beispiele für substituierte Kohlenwasserstoffreste $R^3$ sind insbesondere halogenierte Kohlenwasserstoffreste, wie der 3,3,3-Trifluorpropylrest, Chlorphenyl- und Bromtolylreste; sowie Cyanalkylreste, wie der beta-Cyanethylrest.

Beispiele für substituierte und unsubstituierte, polymere (auch als «modifizierende» zu bezeichnende) Kohlenwasserstoffreste $R^3$ sind über Kohlenstoff an Silicium gebundene Polymerisate und/oder Mischpolymerisate aus mindestens einem durch einen Gehalt an Kohlenstoff-Kohlenstoff-Doppelbindung polymerisierbaren Monomer, wie Ethylen, Styrol, Vinylacetat, n-Butylacrylat, n-Butylmethacrylat oder Acrylnitril.

Mindestens 80% der Anzahl der Reste $R^3$ sind insbesondere wegen der leichteren Zugänglichkeit vorzugsweise Methylreste. Die gegebenenfalls vorhandenen übrigen Reste $R^3$ sind meist Vinyl- und/oder Phenylreste.

Die Viskosität der Diorganopolysiloxane, die bei dem erfindungsgemässen Verfahren eingesetzt werden, beträgt meist 100 bis $10^6$ mPa·s bei 25°C.

Es können Gemische aus verschiedenen Diorganopolysiloxanen verwendet werden.

Bei dem erfindungsgemässen Verfahren zum Herstellen von Organopolysiloxanelastomeren wird das Gemisch aus Umsetzungsprodukt von Kieselsäureester mit organischer Zinnverbindung der Formel (I) und organischer Zinnverbindung der Formel (II) vorzugsweise in Mengen von 2 bis 10 Gewichtsprozent, bezogen auf das Gewicht von zu vernetzendem Diorganopolysiloxan, verwendet.

Zusätzlich zu in den endständigen Einheiten je eine Si-gebundene Hydroxylgruppe aufweisendem Diorganopolysiloxan und erfindungsgemäss verwendetem Härter können auch bei dem erfindungsgemässen Verfahren zum Herstellen von Organopolysiloxanelastomeren Stoffe mitverwendet werden, die herkömmlicherweise bei der Herstellung von Organopolysiloxanelastomeren zusätzlich zu zu vernetzendem Diorganopolysiloxan, Vernetzungsmittel und Vernetzungskatalysator mitverwendet werden. Beispiele für solche Stoffe sind verstärkende und nicht-verstärkende Füllstoffe, wie pyrogen erzeugtes Siliciumdioxyd, Diatomeenerde, Quarzmehl, Gips, einschliesslich Annalin, und Aluminiumsilikat sowie Polyvinylchloridpulver, Pigmente, Wasser, lösliche Farbstoffe, Duftstoffe, Korrosionsinhibitoren, Weichmacher, wie bei Raumtemperatur flüssige, durch Trimethylsiloxygruppen endblockierte Dimethylpolysiloxane, Polyglykole, die veräthert und/oder verestert sein können,und Mittel zur Verstärkung der Haftung der Organopolysiloxanelastomeren auf den Unterlagen, auf denen sie erzeugt werden, wie Epoxyalkylsilane, sowie Lösungsmittel.

Das erfindungsgemässe Verfahren erfolgt durch Vermischen der dabei verwendeten Stoffe und wird vorzugsweise bei −5°C bis 40°C und dem Druck der umgebenden Atmosphäre durchgeführt. Falls erwünscht, können jedoch auch niedrigere oder höhere Temperaturen und Drükke angewendet werden.

Das erfindungsgemässe Verfahren eignet sich insbesondere zur Herstellung von Abdrucken, vor allem Zahnabdrucken, sowie zur Herstellung von Formkörpern und Überzügen.

Im folgenden beziehen sich alle Angaben von Teilen und Prozentsätzen auf das Gewicht, soweit nichts anderes angegeben ist.

Beispiel 1

Eine Mischung aus 3 Teilen Ethoxypolysiloxan mit einem $SiO_2$-Gehalt von etwa 40% und 1 Teil Di-n-butylzinndilaurat wird 12 Stunden auf 120°C erwärmt. Das so erhaltene Umsetzungsprodukt eines Kieselsäureethylesters mit einer organischen Zinnverbindung der Formel (I) wird nach dem Abkühlen mit 5%, bezogen auf sein Gewicht, an Di-n-butylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90% der Säuren an ein tertiäres Kohlenstoffatom gebunden ist (sogenanntes «dibutylzinndiversatat»), als organischer Zinnverbindung der Formel (II) vermischt.

Die so erhaltene erfindungsgemässe Mischung wird mehr oder weniger unmittelbar nach ihrer Herstellung bzw. nach 6 Monaten Lagerung bei Raumtemperatur jeweils in einer Menge von 3%, bezogen auf das Gesamtgewicht von Organopolysiloxan und Füllstoff, in ein Gemisch aus

510 g eines in den endständigen Einheiten je eine Si-gebundene Hydroxylgruppe aufweisenden Dimethylpolysiloxans mit einer Viskosität von 12.000 mPa·s bei 23°C,
510 g eines in den endständigen Einheiten je eine Si-gebundene Hydroxylgruppe aufweisenden Dimethylpolysiloxans mit einer Viskosität von 1.000 mPa·s bei 23°C,
162 g eines durch Trimethylsiloxygruppen endblockierten Dimethylpolysiloxans mit einer Viskosität von 100 mPa·s bei 23°C und
690 g Quarzmehl,

nachdem dieses Gemisch mit 0,3% Wasser, bezogen auf das Gewicht dieses Gemisches, vermischt und 3 Tage bei Raumtemperatur gelagert worden war, eingerührt. Danach wird das Vernetzungsverhalten der Mischung bei 23°C und 50% relativer Luftfeuchtigkeit beobachtet. Die Ergebnisse sind in Tabelle 1 angegeben.

Beispiel 2

Die in Beispiel 1 beschriebene Arbeitsweise wird wiederholt mit der Abänderung, dass 5% Di-n-butylzinndi-2-ethylhexoat als Zinnverbindung der Formel (II) anstelle der 5% des in Beispiel 1

näher beschriebenen Di-n-butylzinndiacylats eingesetzt werden.

Beispiel 3

Die in Beispiel 1 beschriebene Arbeitsweise wird wiederholt mit der Abänderung, dass 5% Di-n-octylzinndi-2-ethylhexoat als Zinnverbindung der Formel (II) anstelle der 5% des in Beispiel 1 näher beschriebenen Di-n-butylzinndiacylats eingesetzt werden.

Vergleichsversuch a)

Die in Beispiel 1 beschriebene Arbeitsweise wird wiederholt mit den Abänderungen, dass keine Zinnverbindung zusätzlich zu dem Umsetzungsprodukt aus Ethoxypolysiloxan und Di-n-butylzinndilaurat mitverwendet und dieses Umsetzungsprodukt in einer Menge von 5%, bezogen auf das Gesamtgewicht von Organopolysiloxan und Füllstoff, eingesetzt wird.

Vergleichsversuch b)

Die in Beispiel 1 beschriebene Arbeitsweise wird wiederholt mit der Abänderung, dass 5% Di-n-butylzinndiacetat, also eine Zinnverbindung der Formel (I), anstelle einer Zinnverbindung der Formel (II) dem Umsetzungsprodukt aus Ethoxypolysiloxan und Di-n-butylzinndilaurat zugesetzt werden.

Beispiel 4

Eine Mischung aus 3 Teilen Ethoxypolysiloxan mit einem $SiO_2$-Gehalt von etwa 40% und 1 Teil Di-n-butylzinndiacetat wird 6 Stunden bei einer Badtemperatur von 105°C unter Rückfluss erwärmt. Das so erhaltene Umsetzungsprodukt eines Kieselsäureethylesters mit einer organischen Zinnverbindung der Formal (I) wird nach dem Abkühlen mit 5%, bezogen auf sein Gewicht, des in Beispiel 1 näher beschriebenen Di-n-butylzinndiacylats («Dibutylzinndiversatat»), vermischt.

Die so erhaltene erfindungsgemässe Mischung wird mehr oder weniger unmittelbar nach ihrer Herstellung bzw. nach 6 Monaten Lagerung bei Raumtemperatur jeweils in einer Menge von 0,75%, bezogen auf das Gesamtgewicht von Organopolysiloxan und Füllstoff, in ein Gemisch aus

230 g eines in den endständigen Einheiten je eine Si-gebundene Hydroxylgruppe aufweisenden Dimethylpolysiloxans mit einer Viskosität von 20.000 mPa · s bei 23°C,
230 g eines in den endständigen Einheiten je eine Si-gebundene Hydroxylgruppe aufweisenden Dimethylpolysiloxans mit einer Viskosität von 350.000 mPa · s bei 23°C und
1.420 g Annalin

nachdem dieses Gemisch mit 0,3%, bezogen auf das Gewicht dieses Gemisches, Wasser versetzt und 3 Tage bei Raumtemperatur gelagert worden war, vermischt. Danach wurde das Vernetzungsverhalten der Mischung bei 23°C und 50% relativer Luftfeuchtigkeit beobachtet. Die Ergebnisse sind in Tabelle 2 angegeben.

Beispiel 5

Die in Beispiel 4 beschriebene Arbeitsweise wird wiederholt mit der Abänderung, das 5% Di-n-butylzinndi-2-ethylhexoat als Zinnverbindung der Formel (II) anstelle der 5% des in Beispiel 1 näher beschriebenen Di-n-butylzinndiacylats eingesetzt werden.

Beispiel 6

Die in Beispiel 4 beschriebene Arbeitsweise wird wiederholt mit der Abänderung, dass 5% Di-n-octylzinn-2-ethylhexoat als Zinnverbindung der Formel (II) anstelle der 5% des in Beispiel 1 näher beschriebenen Di-n-butylzinndiacylats eingesetzt werden.

Vergleichsversuch a')

Die in Beispiel 4 beschriebene Arbeitsweise wird wiederholt mit den Abänderungen, dass keine Zinnverbindung zusätzlich zu dem Umsetzungsprodukt aus Ethoxypolysiloxan und Di-n-butylzinndilaurat mitverwendet und dieses Umsetzungsprodukt in einer Menge von 2%, bezogen auf das Gesamtgewicht von Organopolysiloxan und Füllstoff, eingesetzt wird.

Beispiel 7

Eine Mischung aus 3 Teilen Tetraethylsilikat und 1 Teil Di-n-butylzinndiacetat wird 8 Stunden bei einer Badtemperatur von 105°C unter Rückfluss erwärmt. Das so erhaltene Umsetzungsprodukt eines Kieselsäureethylesters mit einer organischen Zinnverbindung der Formel (I) wird nach dem Abkühlen mit 5%, bezogen auf sein Gewicht, des in Beispiel 1 näher beschriebenen Di-n-butylzinndiacylats («Dibutylzinndiversatat») vermischt.

Die so erhaltene erfindungsgemässe Mischung wird mehr oder weniger nach ihrer Herstellung bzw. nach 6 Monaten Lagerung bei Raumtemperatur jeweils in einer Menge von 3,2%, bezogen auf das Gesamtgewicht von Organopolysiloxan und Füllstoff, mit einem Gemisch aus

650 g eines in den endständigen Einheiten je eine Si-gebundene Hydroxylgruppe aufweisenden Dimethylpolysiloxans mit einer Viskosität von 1.000 mPa · s bei 23°C und
350 g Diatomeenerde,

nachdem dieses Gemisch durch 8 Stunden Erwärmen auf 135°C von flüchtigen Bestandteilen befreit, nach dem Abkühlen mit 0,2%, bezogen auf das Gewicht dieses Gemisches Wasser, vermischt und 3 Tage bei Raumtemperatur gelagert worden war, eingerührt. Danach wird das Vernetzungsverhalten der Mischung bei 23°C und 50% relative Luftfeuchtigkeit beobachtet. Die Ergebnisse sind in Tabelle 3 angegeben.

Beispiel 8

Die in Beispiel 7 beschriebene Arbeitsweise

wird wiederholt mit der Abänderung, dass 5% Di-n-octylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90% der Säuren an ein tertiäres Kohlenstoffatom gebunden ist (sogenanntes «Dioctylzinndiversatat»), als Zinnverbindung der Formel (II) anstelle der 5% des in Beispiel 1 näher beschriebenen Di-n-butylzinndiacylats eingesetzt werden.

Beispiel 9

Die in Beispiel 7 beschriebene Arbeitsweise wird wiederholt mit der Abänderung, dass 5% Di-n-butylzinndi-2-ethylhexoat als Zinnverbindung der Formel (II) anstelle der 5% des in Beispiel 1 näher beschriebenen Di-n-butylzinndiacylats eingesetzt werden.

Beispiel 10

Die in Beispiel 7 beschriebene Arbeitsweise wird wiederholt mit der Abänderung, dass 5% Di-n-octylzinndi-2-ethylhexoat als Zinnverbindung der Formel (II) anstelle der 5% des in Beispiel 1 näher beschriebenen Di-n-butylzinndiacylats eingesetzt werden.

Vergleichsversuch a″)

Die in Beispiel 7 beschriebene Arbeitsweise wird wiederholt mit den Abänderungen, dass keine Zinnverbindung zusätzlich zu dem Umsetzungsprodukt aus Tetraethylsilikat und Di-n-butylzinndilaurat mitverwendet und dieses Umsetzungsprodukt in einer Menge von 4%, bezogen auf das Gesamtgewicht von Organopolysiloxan und Füllstoff, eingesetzt wird.

Die bereits eingangs und in den folgenden Tabellen erwähnte Verarbeitungszeit ist die Zeit, die zwischen dem Beginn des Vermischens der Bestandteile der zum Elastomeren vernetzenden Mischung und merklichem Beginn der Vernetzung verstreicht.

Die in Klammern angegebenen Werte in den Tabellen sind nach 6 Monaten Lagerung der Mischung aus Umsetzungsprodukt von Kieselsäureethylester mit Zinnverbindung der Formel (I) und Zinnverbindung der Formel (II) bzw. (I) erhalten worden. Praktisch die gleichen Werte wurden übrigens nach 4 Wochen Lagerung der Mischungen aus Umsetzungsprodukt von Kieselsäureethylester mit Zinnverbindung der Formel (I) und Zinnverbindung der Formel (II) gemäss allen Beispielen 1 bis 10 bei 60°C beobachtet.

Tabelle 1

| Beispiel bzw. Vergleichsversuch | Verarbeitungszeit | Shore-A-Härte nach 10 Min. | 15 Min. | 30 Min. | 24 Std. |
|---|---|---|---|---|---|
| 1 | 3 Min. 20 Sek. | 23 | 30 | 32 | 41 |
| | (3 Min. 15 Sek.) | (23) | (29) | (32) | (40) |
| 2 | 3 Min. 15 Sek. | 23 | 30 | 31 | 41 |
| | (3 Min. 20 Sek.) | (22) | (29) | (32) | (41) |
| 3 | 3 Min. 20 Sek. | 22 | 29 | 31 | 41 |
| | (3 Min. 25 Sek.) | (21) | (28) | (31) | (41) |
| a) | 3 Min. 50 Sek. | 0 | 1 | 5 | 30 |
| b) | 3 Min. 50 Sek. | 18 | 28 | 30 | 41 |
| | (5 Min. 5 Sek.) | (0) | (6) | (19) | (40) |

Tabelle 2

| Beispiel bzw. Vergleichsversuch | Verarbeitungszeit | Shore-A-Härte nach 10 Min. | 13 Min. | 15 Min. | 30 Min. | 24 Std. |
|---|---|---|---|---|---|---|
| 4 | 3 Min. 30 Sek. | 28 | 36 | 41 | 44 | 58 |
| | (3 Min. 25 Sek.) | (29) | (37) | (41) | (42) | (58) |
| 5 | 3 Min. 25 Sek. | 29 | 37 | 41 | 46 | 58 |
| | (3 Min. 20 Sek.) | (29) | (39) | (43) | (47) | (58) |
| 6 | 3 Min. 30 Sek. | 25 | 36 | 39 | 48 | 58 |
| | (3 Min. 30 Sek.) | (24) | (37) | (42) | (49) | (58) |
| a′ | 4 Min. 5 Sek. | 4 | 17 | 20 | 39 | 59 |

Tabelle 3

| Beispiel bzw. Vergleichsversuch | Verarbeitungszeit | Shore-A-Härte nach 10 Min. | 13 Min. | 15 Min. | 30 Min. | 24 Std. |
|---|---|---|---|---|---|---|
| 7 | 4 Min. 10 Sek. | 41 | 51 | 53 | 56 | 65 |
| | (4 Min. 10 Sek.) | (41) | (51) | (53) | (56) | (65) |

Tabelle 3 (Fortsetzung)

| Beispiel bzw. Vergleichsversuch | Verarbeitungszeit | Shore-A-Härte nach 10 Min. | 13 Min. | 15 Min. | 30 Min. | 24 Std. |
|---|---|---|---|---|---|---|
| 8 | 4 Min. 5 Sek. | 36 | 49 | 52 | 56 | 65 |
| | (4 Min. 5 Sek.) | (37) | (48) | (51) | (56) | (65) |
| 9 | 4 Min. 5 Sek. | 38 | 49 | 53 | 58 | 66 |
| | (4 Min. 10 Sek.) | (37) | (48) | (53) | (58) | (66) |
| 10 | 4 Min. 15 Sek. | 35 | 47 | 51 | 56 | 66 |
| | (4 Min. 15 Sek.) | (35) | (48) | (51) | (57) | (66) |
| a″ | 5 Min. | 12 | 27 | 30 | 47 | 63 |

Aus allen Tabellen ist zu ersehen, dass das Vernetzungsverhalten bei den erfindungsgemässen Mischungen durch Lagerung erheblich weniger verändert wird und dass die solche Mischungen enthaltenden Massen rascher vernetzen.

Beispiel 11

Eine Mischung aus 3 Teilen Tetraethylsilikat und 1 Teil Di-n-ocytylzinndiacetat wird 3 Stunden bei einer Badtemperatur von 120°C unter Rückfluss erwärmt. Nachdem das Bad auf 50°C abgekühlt ist, werden bei 50°C und 22 mBar (abs.) flüchtige Bestandteile abdestilliert. Das dabei zurückbleibende Umsetzungsprodukt eines Kieselsäureethylesters mit einer organischen Zinnverbindung der Formel (I) wird mit 5%, bezogen auf sein Gewicht, Di-n-octylzinndi-2-ethylhexoat vermischt.

Die so erhaltene, erfindungsgemässe Mischung wird in einer Menge von 3,2%, bezogen auf das Gesamtgewicht von Organopolysiloxan und Füllstoff, mit dem in Beispiel 4 beschriebenen Gemisch aus Organopolysiloxan und Füllstoff vermischt, nachdem dieses Gemisch mit 0,3%, bezogen auf das Gewicht dieses Gemisches, Wasser verknetet und 3 Tage bei Raumtemperatur gelagert worden war. Danach wird das Vernetzungsverhalten der Mischung bei 23°C und 50% relativer Luftfeuchtigkeit beobachtet. Es werden folgende Ergebnisse erhalten.

| Verarbeitungszeit | Shore-A-Härte nach 10 Min. | 13 Min. | 15 Min. | 24 Std. |
|---|---|---|---|---|
| 3 Min. 45 Sek. | 35 | 47 | 50 | 65 |

Beispiel 12

Eine Mischung aus 3 Teilen Tetra-(2-methyloxyethyl)-silikat und 1 Teil Di-n-butylzinndilaurat wird 3 Stunden bei einer Badtemperatur von 140°C erwärmt. Das so erhaltene Umsetzungsprodukt eines Kieselsäureesters mit einer organischen Zinnverbindung der Formel (I) wird nach dem Abkühlen mit 5%, bezogen auf sein Gewicht, Di-n-butylzinndi-2-ethylhexoat vermischt. Die so erhaltene, erfindungsgemässe Mischung wird in einer Menge von 2,5%, bezogen auf das Gesamtgewicht von Organopolysiloxan und Füllstoff, mit dem in Beispiel 7 beschriebenen Gemisch aus Organopolysiloxan und Füllstoff vermischt, nachdem dieses Gemisch durch 8 Stunden Erwärmen auf 135°C von flüchtigen Bestandteilen befreit, nach dem Abkühlen mit 0,2%, bezogen auf das Gewicht dieses Gemisches, Wasser vermischt und 3 Tage bei Raumtemperatur gelagert worden war. Danach wird das Vernetzungsverhalten der Mischung bei 23°C und 50% relativer Luftfeuchtigkeit beobachtet. Es werden folgende Ergebnisse erhalten:

| Verarbeitungszeit | Shore-A-Härte nach 8 Min. | 10 Min. | 15 Min. | 24 Std. |
|---|---|---|---|---|
| 3 Min. 45 Sek. | 24 | 35 | 41 | 55 |

Vergleichsversuch

Die in Beispiel 12 beschriebene Arbeitsweise wird wiederholt mit den Abänderungen, dass keine Zinnverbindung zusätzlich zu dem Umsetzungsprodukt aus Kieselsäureester und Di-n-butylzinndilaurat mitverwendet und dieses Umsetzungsprodukt in einer Menge von 4%, bezogen auf das Gesamtgewicht von Organopolysiloxan und Füllstoff, eingesetzt wird.

Es werden folgende Ergebnisse erhalten:

| Verarbeitungszeit | Shore-A-Härte nach 8 Min. | 10 Min. | 15 Min. | 24 Std. |
|---|---|---|---|---|
| 3 Min. 20 Sek. | 0 | 11 | 23 | 52 |

**Patentansprüche für die Vertragsstaaten: CH, DE, FR, IT, LI, NL**

1. Vernetzungsmittel für Diorganopolysiloxane auf Basis eines Umsetzungsprodukts von Kieselsäureester und organischer Zinnverbindung der Formel

$$R_2Sn(OCOR^1)_2 \qquad (I),$$

worin R einen Butyl- oder Octylrest und $R^1$ gleiche oder verschiedene einwertige Kohlenwasserstoffreste mit 1 bis 15 Kohlenstoffatomen bedeutet, wobei höchstens eine der Valenzen des an die Carboxylgruppe gebundenen Kohlenstoffatoms durch ein anderes Kohlenstoffatom als

dasjenige der Carboxylgruppe abgesättigt ist, dadurch gekennzeichnet, dass diese Umsetzungsprodukte im Gemisch mit organischer Zinnverbindung der Formel

$R_2Sn(OCOR^2)_2$ (II),

worin R die vorstehend dafür angegebene Bedeutung hat und $R^2$ gleiche oder verschiedene Kohlenwasserstoffreste mit 3 bis 15 Kohlenstoffatomen bedeutet, wobei mindestens zwei der Valenzen des an die Carboxylgruppe gebundenen Kohlenstoffatome durch mindestens zwei andere Kohlenstoffatome als dasjenige der Carboxylgruppe abgesättigt sind, in Mengen von 0,1 bis 0,2 Mol Verbindung der Formel (II) je Mol Verbindung der Formel (I), das zur Herstellung der jeweils vorliegenden Menge an Umsetzungsprodukt von Kieselsäureester und organischer Zinnverbindung der Formel (I) eingesetzt wurde, vorliegen.

2. Vernetzungsmittel nach Anspruch 1, dadurch gekennzeichnet, dass sie im Gemisch mit mindestens einer organischen Zinnverbindung aus der Gruppe Di-n-butylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90 Gewichtsprozent der Säuren an ein tertiäres Kohlenstoffatom gebunden ist, Di-n-octylzinndiacylat, wobei sich die Acylatgruppen jeweils von einem Gemisch aus 9 bis 15 Kohlenstoffatome je Molekül aufweisenden Carbonsäuren ableiten, worin die Carboxylgruppe bei 90 Gewichtsprozent der Säuren an ein tertiäres Kohlenstoffatom gebunden ist, Di-n-butylzinndi-2-ethylhexoat und Di-n-octylzinndi-2-ethylhexoat als organischer Zinnverbindung der Formel (II) vorliegen.

3. Verfahren zum Herstellen von Organopolysiloxanelastomeren aus in den endständigen Einheiten je eine Si-gebundene Hydroxylgruppe aufweisendem Diorganopolysiloxan und Umsetzungsprodukt aus Kieselsäureester und organischer Zinnverbindung der Formel

$R_2Sn(OCOR^1)_2$ (I),

worin R einen Butyl- oder Octylrest und $R^1$ gleiche oder verschiedene einwertige Kohlenwasserstoffreste mit 1 bis 15 Kohlenstoffatomen bedeutet, wobei höchstens eine der Valenzen des an die Carboxylgruppe gebundenen Kohlenstoffatoms durch ein anderes Kohlenstoffatom als dasjenige der Carboxylgruppe abgesättigt ist, dadurch gekennzeichnet, dass dieses Umsetzungsprodukt im Gemisch mit organischer Zinnverbindung der Formel

$R_2Sn(OCOR^2)_2$ (II),

worin R die vorstehend dafür angegebene Bedeutung hat und $R^2$ gleiche oder verschiedene einwertige aliphatische Kohlenwasserstoffreste mit 3 bis 15 Kohlenstoffatomen bedeutet, wobei mindestens zwei der Valenzen des an die Carboxylgruppe gebundenen Kohlenstoffatoms durch mindestens zwei andere Kohlenstoffatome als dasjenige der Carboxylgruppe abgesättigt sind, eingesetzt wird.

**Patentanspruch für den Vertragsstaat: AT**

Verfahren zum Herstellen von Organopolysiloxanelastomeren aus in den endständigen Einheiten je eine Si-gebundene Hydroxylgruppe aufweisendem Diorganopolysiloxan und Umsetzungsprodukt aus Kieselsäureester und organischer Zinnverbindung der Formel

$R_2Sn(OCOR^1)_2$ (I),

worin R einen Butyl- oder Octylrest und $R^1$ gleiche oder verschiedene einwertige Kohlenwasserstoffreste mit 1 bis 15 Kohlenstoffatomen bedeutet, wobei höchstens eine der Valenzen des an die Carboxylgruppe gebundenen Kohlenstoffatoms durch ein anderes Kohlenstoffatom als dasjenige der Carboxylgruppe abgesättigt ist, dadurch gekennzeichnet, dass dieses Umsetzungsprodukt im Gemisch mit organischer Zinnverbindung der Formel

$R_2Sn(OCOR^2)_2$ (II),

worin R die vorstehend dafür angegebene Bedeutung hat und $R^2$ gleiche oder verschiedene einwertige aliphatische Kohlenwasserstoffreste mit 3 bis 15 Kohlenstoffatomen bedeutet, wobei mindestens zwei der Valenzen des an die Carboxylgruppe gebundenen Kohlenstoffatoms durch mindestens zwei andere Kohlenstoffatome als dasjenige der Carboxylgruppe abgesättigt sind, eingesetzt wird.

**Claims for the Contracting States: CH, DE, FR, IT, LI, NL**

1. Cross-linking agents for diorganopolysiloxanes based on a reaction product of a silicic acid ester and an organic tin compound of the formula

$R_2Sn(OCOR^1)_2$ (I)

in which R represents a butyl or octyl radical and $R^1$ represents the same or different monovalent hydrocarbon radicals having from 1 to 15 carbon atoms, not more than one of the valencies of the carbon atom bonded to the carboxy group being satisfied by a carbon atom other than that of the carboxy group, characterised in that the reaction products are present in admixture with an organic tin compound of the formula

$R_2Sn(OCOR^2)_2$ (II)

in which R has the meaning given above and $R^2$ represents the same or different hydrocarbon radicals having from 3 to 15 carbon atoms, at least two of the valencies of the carbon atom

bonded to the carboxy group each being satisfied by a carbon atom other than that of the carboxy group, in amounts of from 0.1 to 0.2 mole of compound of the formula (II) per mole of compound of the formula (I) used in the manufacture of the amount of the reaction product of a silicic acid ester and an organic tin compound of the formula (I) present in the respective case.

2. Cross-linking agents according to claim 1, characterised in that they are present in admixture with, as the organic tin compound of the formula (II), at least one organic tin compound selected from the group consisting of a di-n-butyltin diacylate in which the acylate groups are each derived from a mixture of carboxylic acids having from 9 to 15 carbon atoms per molecule in which the carboxy group is bonded, in the case of 90% by weight of the acids, to a tertiary carbon atom, a di-n-octyltin diacylate in which the acylate groups are each derived from a mixture of carboxylic acids having from 9 to 15 carbon atoms per molecule in which the carboxy group is bonded, in the case of 90% by weight of the acids, to a tertiary carbon atom, di-n-butyltin di-2-ethylhexoate and di-n-octyltin di-2-ethylhexoate.

3. Process for the manufacture of organopolysiloxane elastomers from a diorganopolysiloxane having an Si-bonded hydroxy group in each terminal unit and from the reaction product of a silicic acid ester and an organic tin compound of the formula.

$R_2Sn(OCOR^1)_2$ (I)

in which R represents a butyl or octyl radical and $R^1$ represents the same or different monovalent hydrocarbon radicals having from 1 to 15 carbon atoms, not more than one of the valencies of the carbon atom bonded to the carboxy group being satisfied by a carbon atom other than that of the carboxy group, characterised in that the reaction product is used in admixture with an organic tin compound of the formula

$R_2Sn(OCOR^2)_2$ (II)

in which R has the meaning given above and $R^2$ represents the same or different monovalent aliphatic hydrocarbon radicals having from 3 to 15 carbon atoms, at least two of the valencies of the carbon atom bonded to the carboxy group each being satisfied by a carbon atom other than that of the carboxy group.

**Claim for the Contracting State: AT**

Process for the manufacture of organopolysiloxane elastomers from a diorganopolysiloxane having an Si-bonded hydroxy group in each terminal unit and from the reaction product of a silicic acid ester and an organic tin compound of the formula

$R_2Sn(OCOR^1)_2$ (I)

in which R represents a butyl or octyl radical and $R^1$ represents the same or different monovalent hydrocarbon radicals having from 1 to 15 carbon atoms, not more than one of the valencies of the carbon atom bonded to the carboxy group being satisfied by a carbon atom other than that of the carboxy group, characterised in that the reaction product is used in admixture with an organic tin compound of the formula

$R_2Sn(OCOR^2)_2$ (II)

in which R has the meaning given above and $R^2$ represents the same or different monovalent aliphatic hydrocarbon radicals having from 3 to 15 carbon atoms, at least two of the valencies of the carbon atom bonded to the carboxy group each being satisfied by a carbon atom other than that of the carboxy group.

**Revendications pour les Etats contractants: CH, DE, FR, IT, LI, NL**

1. Agent de réticulation de polydiorganosiloxanes, à base d'un produit de réaction d'un ester d'acide silicique et d'un composé organique d'étain de formule:

$R_2Sn(OCOR^1)_2$ (I),

(dans laquelle R représente un radical butyle ou octyle et $R^1$ représente des radicaux d'hydrocarbures monovalents identiques ou différents comportant 1 à 15 atomes de carbone, l'une au maximum des valences de l'atome de carbone lié au groupe carboxyle étant saturée par un autre atome de carbone que celui du groupe carboxyle), agent caractérisé en ce que ces produits de réaction sont présents en mélange avec un composé organique d'étain de formule:

$R_2Sn(OCOR^2)_2$ (II),

(dans laquelle R a le sens indiqué ci-dessus et $R^2$ représente des radicaux d'hydrocarbures identiques ou différents comportant 3 à 15 atomes de carbone, deux au moins des valences de l'atome de carbone lié au groupe carboxyle étant saturées par au moins deux autres atomes de carbone que celui du groupe carboxyle), en des quantités de 0,1 à 0,2 mole du composé de formule (II) par mole du composé de formule (I) ayant servi à préparer la quantité chaque fois présente du produit de réaction de l'ester d'acide silicique et du composé organique d'étain de formule (I).

2. Agents de réticulation selon la revendication 1, caractérisés en ce qu'ils sont présents en mélange avec au moins un composé organique d'étain choisi parmi un diacylate de di-n-butylétain (dans lequel les groupes acylates dérivent chaque fois d'un mélange d'acides carboxyliques présentant par molécule de 9 à 15 atomes de carbone, le groupe carboxyle étant fixé dans 90% en poids des acides, sur un atome de carbone tertiaire), un diacylate de di-n-octylétain (dont les

groupes acylates dérivent à chaque fois d'un mélange d'acides carboxyliques comportant par molécule 9 à 15 atomes de carbone, le groupe carboxyle étant fixé, dans 90% en poids des acides, sur un atome de carbone tertiaire), le bis(éthyl-2 hexoate) de di-n-butylétain et le bis(éthyl-2 hexoate) de di-n-octylétain comme composé organique d'étain de formule (II).

3. Procédé de préparation de polyorganosiloxanes élastomères à partir d'un polydiorganosiloxane présentant un groupe hydroxyle lié à du silicium dans chacun des motifs terminaux et à partir d'un produit de réaction d'un ester d'acide silicique (silicate d'éthyle) et d'un composé organique d'étain de formule:

$R_2Sn(OCOR^1)_2$ (I),

(dans laquelle R représente un radical butyle ou octyle, et $R^1$ représente des radicaux d'hydrocarbures monovalents identiques ou différents, comportant 1 à 15 atomes de carbone, l'une au maximum des valences de l'atome de carbone lié au groupe carboxyle étant saturée par un atome de carbone autre que celui du groupe carboxyle), procédé caractérisé en ce qu'on utilise ce produit de réaction en mélange avec un composé organique d'étain de formule:

$R_2Sn(OCOR^2)_2$ (II),

(dans laquelle R a le sens indiqué ci-dessus et $R^2$ représente les radicaux d'hydrocarbures aliphatiques monovalents, identiques ou différents, comportant 3 à 15 atomes de carbone, deux au moins des valences de l'atome de carbone lié au groupe carboxyle étant saturées par au moins deux autres atomes de carbone que celui du groupe carboxyle).

**Revendication pour l'Etat contractant: AT**

Procédé de préparation de polyorganosiloxanes élastomères à partir d'un polydiorganosiloxane présentant un groupe hydroxyle lié à du silicium dans chacun des motifs terminaux et à partir d'un produit de réaction d'un ester d'acide silicique (silicate d'éthyle) et d'un composé organique d'étain de formule:

$R_2Sn(OCOR^1)_2$ (I),

(dans laquelle R représente un radical butyle ou octyle, et $R^1$ représente des radicaux d'hydrocarbures monovalents identiques ou différents, comportant 1 à 15 atomes de carbone, l'une au maximum des valences de l'atome de carbone lié au groupe carboxyle étant saturée par un atome de carbone autre que celui du groupe carboxyle), procédé caractérisé en ce qu'on utilise ce produit de réaction en mélange avec un composé organique d'étain de formule:

$R_2Sn(OCOR^2)_2$ (II).

(dans laquelle R a le sens indiqué ci-dessus et $R^2$ représente les radicaux d'hydrocarbures aliphatiques monovalents, identiques ou différents, comportant 3 à 15 atomes de carbone, deux au moins des valences de l'atome de carbone lié au groupe carboxyle étant saturées par au moins deux autres atomes de carbone que celui du groupe carboxyle).